# EUROPEAN PATENT APPLICATION

(11) **EP 2 928 128 A1**
(43) Date of publication of application: **07.10.2015**
(21) Application number: 12891255.7
(22) Date of filing: 26.12.2012
(51) Int. Cl.: H04L 12/723

(54) **IP DATA PACKAGE TRANSMITTING METHOD AND LABEL SWITCHING ROUTER**

(71) Applicant: Huawei Technologies Co., Ltd., Longgang District Shenzhen, Guangdong 518129 (CN)
(72) Inventor: JIANG, Sheng, Shenzhen Guangdong 518129 (CN); FU, Yu, Shenzhen Guangdong 518129 (CN)
(74) Representative: Körber, Martin Hans
(86) International application number: PCT/CN2012/087536
(87) International publication number: WO 2014/101002

(57) **Abstract**

An IP data packet sending method and a label switching router are disclosed. The IP data packet sending method includes: receiving a first IP data packet sent by a user by using a user equipment; allocating a first label and a second label to the first IP data packet, where the first label is used to identify a destination address of the first IP data packet, the second label is used to identify semantic information corresponding to the first IP data packet, and the semantic information is different from the destination address; encapsulating the first label and the second label into an outer layer of the first IP data packet to form a second IP data packet, where the second label is an outer label, and the first label is an inner label; and sending the second IP data packet according to the first label and the second label. Therefore, an LSR in an LSR domain can effectively implement differentiated forwarding of an IP data packet, thereby meeting a requirement of an operator for a differentiated service of forwarding an IP data packet.

## Description

### TECHNICAL FIELD

Embodiments of the present invention relate to the field of communications technologies, and in particular, to an IP data packet sending method and a label switching router.

### BACKGROUND

A multi-protocol label switching (English: Multi-Protocol Label Switching, MPLS for short) technology is a system for quick data packet exchange and routing, and provides capabilities such as targeting, routing, sending, and exchange for network data traffic. In addition, the MPLS technology provides a function of mapping an Internet Protocol (English: Internet Protocol, IP for short) address to a simple label with a fixed length, and is used in a technology for sending different IP data packets and a technology for exchanging IP data packets.

The MPLS technology mainly includes two functions, that is, sending and control, where the sending refers to sending an IP data packet according to information that is about a label and is carried in the IP data packet and sending information that is stored in a label switching router (English: Label Switching Router, LSR for short) and corresponds to the label, and the control refers to transferring correct label sending information between interconnected LSRs.

However, the MPLS technology cannot meet a requirement of an operator for a differentiated service of forwarding an IP data packet, where the differentiated service refers to that an LSP can provide services of different types according to different user policies delivered by an operator for customers of different types.

### SUMMARY

Embodiments of the present invention provide an IP data packet sending method and a label switching router, which are used in an LSR domain. An LSR sends an IP data packet according to a first label and a second label of the IP data packet. Because the second label is used to identify a type of semantic information of the IP data packet, and the semantic information does not include a destination address, the LSR in the LSR domain can send the IP data packet according to the type of the semantic information of the IP data packet that is identified by the second label, thereby meeting a requirement of an operator for a differentiated service of sending an IP data packet.

According to a first aspect, an IP data packet sending method is provided and may include:
receiving a first IP data packet sent by a user by using a user equipment;
allocating a first label and a second label to the first IP data packet, where the first label is used to identify a destination address of the first IP data packet, the second label is used to identify a type of semantic information corresponding to the first IP data packet, and the semantic information is different from the destination address;
encapsulating the first label and the second label into an outer layer of the first IP data packet to form a second IP data packet, where the second label is an outer label, and the first label is an inner label; and
sending the second IP data packet according to the first label and the second label.

According to the first aspect, in a first possible implementation manner, the sending the second IP data packet according to the first label and the second label includes:
determining, by using the first label, a routing path that can be used to send the second IP data packet;
selecting, by using the second label, one routing path from the routing path that can be used to send the second IP data packet; and
sending the second IP data packet according to the selected routing path.

With reference to the first possible implementation manner of the first aspect, in a second possible implementation manner, the semantic information includes user information of the user, and the second label is used to identify a type of the user information; and the selecting, by using the second label, one routing path from the routing path that can be used to send the second IP data packet includes: selecting, by using a level corresponding to the type of the user information, one routing path from the routing path that can be used to send the second IP data packet.

With reference to the second possible implementation manner of the first aspect, in a third possible implementation manner, the semantic information further includes security requirement information of the user, and the second label is further used to identify a type of the security requirement information; and the selecting, by using a level corresponding to the type of the user information, one routing path from the routing path that can be used to send the second IP data packet includes: selecting, by using the level corresponding to the type of the user information and a level corresponding to the type of the security requirement information, one routing path from the routing path that can be used to send the second IP data packet.

With reference to the first possible implementation manner of the first aspect, in a fourth possible implementation manner, the semantic information includes service information carried in the first IP data packet, and the second label is used to identify a type of the service information; and the selecting, by using the second label, one routing path from the routing path that can be used to send the second IP data packet includes: selecting, by using a level corresponding to the type of the service information, one routing path from the routing path that can be used to send the second IP data packet.

With reference to the fourth possible implementation manner of the first aspect, in a fifth possible implementation manner, the semantic information further includes security requirement information corresponding to the service information, and the second label is further used to identify a type of the security requirement information; and the selecting, by using a level corresponding to the type of the service information, one routing path from the routing path that can be used to send the second IP data packet includes: selecting, by using the level corresponding to the type of the service information and a level corresponding to the type of the security requirement information, one routing path from the routing path that can be used to send the second IP data packet.

With reference to the first possible implementation manner of the first aspect, in a sixth possible implementation manner, the semantic information includes a source address of the first IP data packet, and the second label is used to identify source address classification information corresponding to the source address; and the selecting, by using the second label, one routing path from the routing path that can be used to send the second IP data packet includes: selecting, by using the source address classification information, one routing path from the routing path that can be used to send the second IP data packet.

With reference to the sixth possible implementation manner of the first aspect, in a seventh possible implementation manner, the semantic information further includes security requirement information corresponding to the source address classification information, and the second label is further used to identify a type of the security requirement information; and the selecting, by using the source address classification information, one routing path from the routing path that can be used to send the second IP data packet includes: selecting, by using the source address classification information and a level corresponding to the type of the security requirement information, one routing path from the routing path that can be used to send the second IP data packet.

According to a second aspect, a label switching router is provided and may include:
a receiving unit, configured to receive a first IP data packet sent by a user by using a user equipment;
an allocation unit, configured to: after the receiving unit receives the first IP data packet, allocate a first label and a second label to the first IP data packet, where the first label is used to identify a destination address of the first IP data packet, the second label is used to identify a type of semantic information corresponding to the first IP data packet, and the semantic information is different from the destination address;
an encapsulation unit, configured to: after the allocation unit allocates the first label and the second label, encapsulate the first label and the second label into an outer layer of the first IP data packet to form a second IP data packet, where the second label is an outer label, and the first label is an inner label; and
a sending unit, configured to: after the encapsulation unit forms the second IP data packet, send the second IP data packet according to the first label and the second label.

In a first possible implementation manner of the second aspect, the sending unit includes:
a determining unit, configured to: after the encapsulation unit forms the second IP data packet, determine, by using the first label, a routing path that can be used to send the second IP data packet;
a selecting unit, configured to: after the determining unit determines the routing path that can be used to send the second IP data packet, select, by using the second label, one routing path from the routing path that can be used to send the second IP data packet; and
a data packet sending unit, configured to: after the selecting unit selects the routing path, send the second IP data packet according to the selected routing path.

With reference to the first possible implementation manner of the first aspect, in a second possible implementation manner, the semantic information includes user information of the user, the second label is used to identify a type of the user information, and the selecting unit is configured to: after the determining unit determines the routing path that can be used to send the second IP data packet, select, by using a level corresponding to the type of the user information, one routing path from the routing path that can be used to send the second IP data packet.

With reference to the second possible implementation manner of the second aspect, in a third possible implementation manner, the semantic information further includes security requirement information of the user, the second label is further used to identify a type of the security requirement information, and the selecting unit is configured to: after the determining unit determines the routing path that can be used to send the second IP data packet, select, by using the level corresponding to the type of the user information and a level corresponding to the type of the security requirement information, one routing path from the routing path that can be used to send the second IP data packet.

With reference to the first possible implementation manner of the second aspect, in a fourth possible implementation manner, the semantic information includes service information carried in the first IP data packet, the second label is used to identify a type of the service information, and the selecting unit is configured to: after the determining unit determines the routing path that can be used to send the second IP data packet, select, by using a level corresponding to the type of the service information, one routing path from the routing path that can be used to send the second IP data packet.

With reference to the fourth possible implementation manner of the second aspect, in a fifth possible implementation manner, the semantic information further includes security requirement information corresponding to the service information, the second label is further used to identify a type of the security requirement information, and the selecting unit is configured to: after the determining unit determines the routing path that can be used to send the second IP data packet, select, by using the level corresponding to the type of the service information and a level corresponding to the type of the security requirement information, one routing path from the routing path that can be used to send the second IP data packet.

With reference to the first possible implementation manner of the second aspect, in a sixth possible implementation manner, the semantic information includes a source address of the first IP data packet, the second label is used to identify source address classification information corresponding to the source address, and the selecting unit is configured to: after the determining unit determines the routing path that can be used to send the second IP data packet, select, by using the source address classification information, one routing path from the routing path that can be used to send the second IP data packet.

With reference to the sixth possible implementation manner of the second aspect, in a seventh possible implementation manner, the semantic information further includes security requirement information corresponding to the source address classification information, the second label is further used to identify a type of the security requirement information, and the selecting unit is configured to: after the determining unit determines the routing path that can be used to send the second IP data packet, select, by using the source address classification information and a level corresponding to the type of the security requirement information, one routing path from the routing path that can be used to send the second IP data packet.

According to a third aspect, a label switching router is provided and may include:
a receiver, a processor, and a sender, where
the receiver is configured to receive a first IP data packet sent by a user by using a user equipment;
the processor is configured to: after the receiver receives the first IP data packet, allocate a first label and a second label to the first IP data packet, where the first label is used to identify a destination address of the first IP data packet, the second label is used to identify a type of semantic information corresponding to the first IP data packet, and the semantic information is different from the destination address; encapsulate the first label and the second label into an outer layer of the first IP data packet to form a second IP data packet, where the second label is an outer label, and the first label is an inner label; and trigger the sender to send the second IP data packet according to the first label and the second label; and
the sender is configured to send the second IP data packet.

As can be seen from the foregoing technical solutions, the embodiments of the present invention have the following advantages:

After receiving a first IP data packet, an edge LSR allocates a first label and a second label to the first IP data packet, where the first label is used to identify a destination address of the first IP data packet, the second label is used to identify a type of semantic information corresponding to the first IP data packet, and the semantic information is different from the destination address; then, the edge LSR encapsulates the first label and the second label into an outer layer of the first IP data packet to form a second IP data packet, where the second label is an outer label, and the first label is an inner label; and the edge LSR sends the second IP data packet according to the first label and the second label in the second IP data packet. Because the second label is used to identify the type of the semantic information, an LSR in an LSR domain can effectively implement differentiated forwarding of an IP data packet, thereby meeting a requirement of an operator for a differentiated service of forwarding an IP data packet.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person skilled in the art may still derive other drawings from these accompanying drawings without creative efforts.
FIG. 1 is a schematic diagram of an IP data packet sending method according to an embodiment of the present invention;
FIG. 2 is a schematic diagram of an IP data packet sending method according to an embodiment of the present invention;
FIG. 3 is a schematic structural diagram of a label switching router according to an embodiment of the present invention;
FIG. 4 is another schematic structural diagram of a label switching router according to an embodiment of the present invention; and
FIG. 5 is still another schematic structural diagram of a label switching router according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person skilled in the art based on the embodiments of the present invention without creative efforts shall fall within the protection scope of the present invention.

Embodiments of the present invention provide an IP data packet sending method and a label switching router, which are used in an LSR domain, where an LSR sends an IP data packet according to a first label and a second label of the IP data packet. Because the second label is used to identify a type of semantic information of the IP data packet, and the semantic information is different from a destination address, the LSR in the LSR domain can send the IP data packet according to the type of the semantic information of the IP data packet that is identified by the second label, thereby meeting a requirement of an operator for a differentiated service of forwarding an IP data packet. The semantic information includes information that indicates a meaning by using a special number.

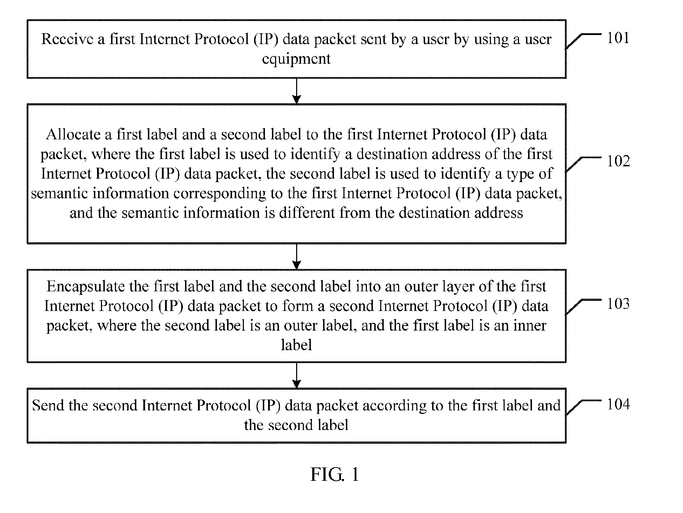

To better understand the technical solutions of the present invention, refer to FIG. 1, which is an embodiment of an IP data packet sending method according to an embodiment of the present invention, including:
101: Receive a first IP data packet sent by a user by using a user equipment.

In this embodiment of the present invention, an LSR domain refers to that all routers in the domain are routers that have a sending function of performing sending according to semantic information identified by a label, an LSR on an edge of the LSR domain may be referred to as an edge LSR, and an LSR except the edge LSR in the LSR domain may be referred to as a core LSR.

In this embodiment of the present invention, the first IP data packet sent by the user by using the user equipment may enter the LSR domain through the edge LSR of the LSR domain; therefore, the edge LSR may receive the first IP data packet sent by the user by using the user equipment.

102: Allocate a first label and a second label to the first IP data packet, where the first label is used to identify a destination address of the first IP data packet, the second label is used to identify a type of semantic information corresponding to the first IP data packet, and the semantic information is different from the destination address.

In this embodiment of the present invention, after receiving the first IP data packet that enters the LSR domain, the edge LSR in the LSR domain obtains the destination address of the first IP data packet; allocates the first label to the first IP data packet, where the first label is used to identify the destination address of the first IP data packet; obtains the semantic information in the first IP data packet; and allocates the second label to the semantic information, where the second label is used to identify the type of the semantic information corresponding to the first IP data packet, and the semantic information is different from the destination address.

It should be noted that all semantic information in the embodiments of the present invention refers to semantic information different from a destination address.

In this embodiment of the present invention, an outer layer of an IP data packet is located outside a packet header of the IP data packet, the packet header of the IP data packet is located in a Layer 3 network, and a label is usually located between a Layer 2 network and the Layer 3 network of the IP data packet.

103: Encapsulate the first label and the second label into an outer layer of the first IP data packet to form a second IP data packet, where the second label is an outer label, and the first label is an inner label.

In this embodiment of the present invention, after allocating the first label and the second label to the first IP data packet, the edge LSR encapsulates the first label and the second label into the outer layer of the first IP data packet to form the second IP data packet, where the second label is an outer label and the first label is an inner label. The outer label and the inner label refer to relative locations between labels; and in this embodiment of the present invention, the second label is located outside the first label.

In this embodiment of the present invention, both the first label and the second label are located outside the packet header of the IP data packet, the packet header of the IP data packet is located in the Layer 3 network, and a label is usually located between the Layer 2 network and the Layer 3 network of the IP data packet.

It should be noted that in this embodiment of the present invention, the semantic information includes, but is not limited to, user information, service information, security requirement information, source address classification information; and the semantic information may further include service classification information, quality of service information, traffic type identification information, and destination outbound interface classification information.

In this embodiment of the present invention, the edge LSR may obtain the semantic information of the first IP data packet by parsing the first IP data packet and/or interacting with an authentication, authorization, and accounting (English: Authentication, Authorization, Accounting, AAA for short) server.

In this embodiment of the present invention, if the obtained semantic information includes at least one of a source address, a destination outbound interface, and quality of service information, the edge LSR may obtain corresponding information by parsing a packet header of the first IP data packet; if the obtained semantic information includes at least one of user information, service classification information, and security requirement information, the LSR may obtain corresponding information by interacting with the AAA server; and if the obtained semantic information includes service information, the LSR may obtain service information of the first IP data packet by parsing data in effective load of the first IP data packet.

It should be noted that in this embodiment of the present invention, the type of the semantic information that is identified by the second label may be preset by an operator in an operator policy, so that when obtaining the semantic information in the first IP data packet, the edge LSR may obtain corresponding information according to the type of the semantic information that is preset by the operator. For example, if the operator presets that the second label is used to identify service information, the edge LSR obtains the service information from the first IP data packet and allocates the second label to the service information. Therefore, in this embodiment of the present invention, the type of the semantic information may be preset by an operator in an operator policy, which is not limited herein.

104: Send the second IP data packet according to the first label and the second label.

In this embodiment of the present invention, after encapsulating the first label and the second label into the outer layer of the first IP data packet to form the second IP data packet, the edge LSR sends the second IP data packet according to the first label and the second label of the second IP data packet.

In this embodiment of the present invention, after receiving a first IP data packet sent by a user by using a user equipment, an edge LSR allocates a first label and a second label to the first IP data packet; encapsulates the first label and the second label into an outer layer of the first IP data packet, where the first label is used to identify a destination address, the second label is used to identify a type of semantic information, and the semantic information is different from the destination address; and sends a second IP data packet according to the first label and the second label. Because the second label is used to identify the type of the semantic information, differentiated forwarding of an IP data packet can be effectively implemented, thereby meeting a requirement of an operator for differentiated forwarding of an IP data packet.

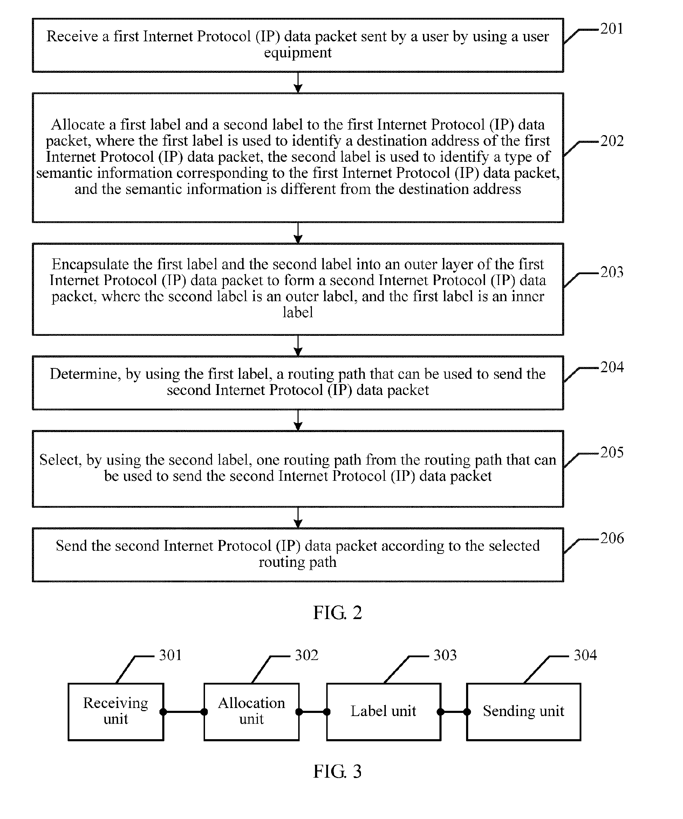

To better understand the technical solutions for sending an IP data packet in the embodiments of the present invention, refer to FIG. 2, which is an embodiment of an IP data packet sending method according to an embodiment of the present invention, including:
201: Receive a first IP data packet sent by a user by using a user equipment.
202: Allocate a first label and a second label to the first IP data packet, where the first label is used to identify a destination address of the first IP data packet, the second label is used to identify a type of semantic information corresponding to the first IP data packet, and the semantic information is different from the destination address.
203: Encapsulate the first label and the second label into an outer layer of the first IP data packet to form a second IP data packet, where the second label is an outer label, and the first label is an inner label.

Step 201 to step 203 are similar to step 101 to step 103 described in the embodiment shown in FIG. 1, and details are not described herein again.

204: Determine, by using the first label, a routing path that can be used to send the second IP data packet.

In this embodiment of the present invention, the first label is used to identify a destination address, and an edge LSR determines, by using the destination address identified by the first label, the routing path that can be used to send the second IP data packet.

205: Select, by using the second label, one routing path from the routing path that can be used to send the second IP data packet.

In this embodiment of the present invention, the second label is used to identify a type of the semantic information, and the edge LSR may select, by using the second label, one routing path from the routing path that can be used to send the second IP data packet.

In this embodiment of the present invention, the type of the semantic information obtained by the edge LSR may be preset by an operator in an operator policy; and the semantic information includes service information, user information, security requirement information, a source address, and in addition, the semantic information may further include service classification information, quality of service information, traffic type identification information, and destination outbound interface classification information. The second label may identify a type of at least one type of semantic information in the foregoing semantic information.

Service information is used to identify a type of service information carried in an IP data packet, for example, the type of the service information may be a game service, a video service, an audio service, a data service, or the like, so that the LSR forwards the IP data packet by using a level corresponding to the type of the service information that is identified by the second label of the IP data packet, and performs statistics collection and service classification, so that an operator may use obtained statistics and service classification data of the IP data packet in fields such as network management, network monitoring, and network resource allocation.

User information is user information of the IP data packet, which is obtained from an AAA server by an edge LSR receiving an IP data packet when the IP data packet enters an LSR domain, and the user information may be used to identify a user type, so that the LSR can prioritize forwarding of an IP data packet with a high-level user category.

Security requirement information is used to identify a security requirement of an IP data packet, so that an LSR receiving the IP data packet may select, according to the security requirement information, a routing path including a router having a security processing function from routers that can be used to forward the IP data packet, and forwards the IP data packet by using the selected routing path including the router having the security processing function.

Source address classification information may be used by an LSR to further select a routing path of an IP data packet, for example, it is set in the LSR that multiple IP data packets with same source address classification information have a same routing path and are all sent to a same next-hop router, and the LSR may select, according to source address classification information in semantic information of an IP data packet and from a routing path that can be used to forward the IP data packet, a routing path on which a router that has sent an IP data packet with the same source address classification information is located, to forward the IP data packet.

Service classification information is used to identify a service level, for example, a service may be classified into three levels: high, intermediate, and low; and an LSR may prioritize, according to a service level in service classification information of an IP data packet, processing and sending of an IP data packet with a higher service level.

Quality of service information is used to identify a service requirement of an IP data packet.

Traffic type identification information is used to identify a traffic type of an IP data packet, for example, the traffic type may be a video stream or a bank service stream.

Destination outbound interface classification information may be used by an LSR to further determine a routing path of an IP data packet, for example, it is set in the LSR that multiple IP data packets with same destination outbound interface classification information have a same routing path and are all sent to a same next-hop router, and the LSR may select, according to destination outbound interface classification information in semantic information of an IP data packet and from the routing path that can be used to send the IP data packet, a routing path on which a next-hop router that has sent an IP data packet with the same destination outbound interface classification information is located, to send the IP data packet.

In this embodiment of the present invention, if the semantic information includes user information of the user, and the second label is used to identify a type of the user information; and the selecting, by using the second label, one routing path from the routing path that can be used to send the second IP data packet specifically includes: selecting, by an edge LSR by using a level corresponding to the type of the user information, one routing path from the routing path that can be used to send the second IP data packet. For example, if a type of user information of the second IP data packet that is identified by the second label is a very important person (English: Very Important Person, VIP for short) user, and a level corresponding to the VIP user is level 1, a routing path with the best forwarding performance is selected from the routing path that can be used to send the second IP data packet, to send the second IP data packet, where forwarding performance may be a packet loss ratio, a load on a routing path, or the like. In an actual application, an operator may set a correspondence between a type of user information and a level, and a correspondence between a level corresponding to a type of user information and forwarding routing, which is not limited herein.

In this embodiment of the present invention, if the semantic information includes user information and security requirement information, and the second label is used to identify a type of the user information and a type of the security requirement information, the selecting, by using the second label, one routing path from the routing path that can be used to send the second IP data packet includes: selecting, by using a level corresponding to the type of the user information and a level corresponding to the type of the security requirement information, one routing path from the routing path that can be used to send the second IP data packet. For example, if an operator presets in an operator policy that the second label is used to identify the type of user information and the type of security requirement information, an LSR selects, according to the level corresponding to the type of the security requirement information, a routing path including a router having a security processing function from the routing path that can be used to send the second IP data packet; selects a routing path corresponding to the level corresponding to the type of the user information from the selected routing path including the router having the security processing function; and sends the second IP data packet by using the routing path. It should be noted that a correspondence between a routing path and a level corresponding to a type of user information may also be preset by the operator, which is not limited herein.

In this embodiment of the present invention, if the semantic information includes service information carried in the first IP data packet, and the second label is used to identify a type of the service information, the selecting, by using the second label, one routing path from the routing path that can be used to send the second IP data packet specifically includes: selecting, by using a level corresponding to the type of the service information that is identified by the second label, one routing path from the routing path that can be used to send the second IP data packet. For example, if an operator presets in an operator policy that a type of service information that is identified by the second label is a video service, an LSR may select a routing path corresponding to a level corresponding to the video service from the routing path that can be used to send the second IP data packet, to send the second IP data packet.

In this embodiment of the present invention, if the semantic information includes service information and security requirement information, and the second label is used to identify a type of the service information and a type of the security requirement information, the selecting, by using the second label, one routing path from the routing path that can be used to send the second IP data packet specifically includes: selecting, by using a level corresponding to the type of the service information and a level corresponding to the type of the security requirement information, one routing path from the routing path that can be used to send the second IP data packet. For example, if an operator presets in an operator policy that the second label is used to identify the type of service information and the type of security requirement information, an LSR may select, according to the level corresponding to the type of the security requirement information, a routing path including a router having a security processing function from the routing path that can be used to send the second IP data packet; select a routing path corresponding to the level corresponding to the type of the service information from the selected routing path including the router having the security processing function; and send the second IP data packet by using the routing path. It should be noted that a correspondence between a routing path and a level corresponding to a type of service information may also be preset by the operator, which is not limited herein.

In this embodiment of the present invention, if the semantic information includes a source address of the first IP data packet, and the second label is used to identify source address classification information corresponding to the source address, the selecting, by using the second label, one routing path from the routing path that can be used to send the second IP data packet includes: selecting, by using the source address classification information, one routing path from the routing path that can be used to send the second IP data packet. For example, if the second label is used to identify source address classification information, the LSR selects, from the routing path that can be used to send the second IP data packet, a routing path that has been used to send an IP data packet with same source address classification information; and sends the second IP data packet by using the routing path.

In this embodiment of the present invention, if the semantic information includes a source address and security requirement information, the selecting, by using the second label, one routing path from the routing path that can be used to send the second IP data packet specifically includes: selecting, by using the source address classification information and a type of the security requirement information, one routing path from the routing path that can be used to send the second IP data packet. For example, if the second label is used to identify source address classification information and a type of security requirement information, the LSR selects, according to the level corresponding to the type of the security requirement information, a routing path including a router having a security processing function from the routing path that can be used to send the second IP data packet; selects, from the routing path including the router having the security processing function, a routing path that has been used to send an IP data packet with same source address classification information; and sends the second IP data packet by using the routing path.

206: Send the second IP data packet according to the selected routing path.

In this embodiment of the present invention, after selecting, by using the second label, one routing path from the routing path that can be used to send the second IP data packet, the edge LSR sends the second IP data packet according to the selected routing path.

In the embodiments of the present invention, the following is described in the embodiments shown in FIG. 1 and FIG. 2: after a first IP data packet enters an LSR domain, an edge LSR receiving the first IP data packet allocates a first label and a second label to the IP data packet to form a second IP data packet, and sends the second IP data packet by using the first label and the second label, where the second IP data packet is sent to a core LSR in the LSR domain; and after forwarding of the second IP data packet in the LSR domain is completed, an edge LSR sends the second IP data packet to a router outside the LSR domain.

In the embodiments of the present invention, when a second IP data packet is forwarded in an LSR domain, a first label and a second label are carried in an outer layer of the second IP data packet, and all LSRs receiving the second IP data packet may send the IP data packet according to the first label and the second label, to implement differentiated forwarding of the IP data packet in the LSR domain.

It should be noted that in the embodiments of the present invention, before sending a second IP data packet to a router outside an LSR domain, an edge LSR removes a first label and a second label from an outer layer of the IP data packet, and sends, to a corresponding router outside the LSR domain, the second IP data packet from which the first label and the second label has been removed.

It should be noted that in the embodiment shown in FIG. 2, an example in which one label is allocated to the semantic information is used, but in an actual application, the number of labels may be set as needed; and a length of a label may be set to be 32 bits, and an operator may also set a length of each label as needed, which is not limited herein.

In this embodiment of the present invention, after receiving a first IP data packet sent by a user by using a user equipment, an edge LSR allocates, to the first IP data packet, a first label for identifying a destination address and a second label for identifying a type of semantic information; encapsulates the allocated first label and second label into an outer layer of the first IP data packet to form a second IP data packet, where the semantic information is different from the destination address; and sends the second IP data packet according to the first label and the second label of the second IP data packet. Because the second label is used to identify the type of the semantic information, by sending the second IP data packet by using the type of the semantic information, differentiated forwarding of the IP data packet can be effectively implemented, thereby meeting a requirement of an operator for a differentiated service of forwarding an IP data packet.

Referring to FIG. 3, FIG. 3 is an embodiment of a structure of a label switching router according to an embodiment of the present invention, including:
a receiving unit 301, configured to receive a first IP data packet sent by a user by using a user equipment;
an allocation unit 302, configured to: after the receiving unit 301 receives the first IP data packet, allocate a first label and a second label to the first IP data packet, where the first label is used to identify a destination address of the first IP data packet, the second label is used to identify a type of semantic information corresponding to the first IP data packet, and the semantic information is different from the destination address;
an encapsulation unit 303, configured to: after the allocation unit 302 allocates the first label and the second label, encapsulate the first label and the second label into an outer layer of the first IP data packet to form a second IP data packet, where the second label is an outer label, and the first label is an inner label; and
a sending unit 304, configured to: after the encapsulation unit 303 forms the second IP data packet, send the second IP data packet according to the first label and the second label.

In this embodiment of the present invention, in the label switching router, after the receiving unit 301 receives a first IP data packet sent by a user by using a user equipment, the allocation unit 302 allocates a first label and a second label to the first IP data packet, where the first label is used to identify a destination address of the first IP data packet, the second label is used to identify a type of semantic information corresponding to the first IP data packet, and the semantic information is different from the destination address; then, the encapsulation unit 303 encapsulates the first label and the second label into an outer layer of the first IP data packet to form a second IP data packet, where the second label is an outer label, and the first label is an inner label; and after the encapsulation unit 303 forms the second IP data packet, the sending unit 304 sends the second IP data packet according to the first label and the second label.

In this embodiment of the present invention, after receiving a first IP data packet sent by a user by using a user equipment, an edge LSR allocates a first label and a second label to the first IP data packet; encapsulates the first label and the second label into an outer layer of the first IP data packet, where the first label is used to identify a destination address, the second label is used to identify a type of semantic information, and the semantic information is different from the destination address; and sends a second IP data packet according to the first label and the second label. Because the second label is used to identify the type of the semantic information, differentiated forwarding of an IP data packet can be effectively implemented, thereby meeting a requirement of an operator for differentiated forwarding of an IP data packet.

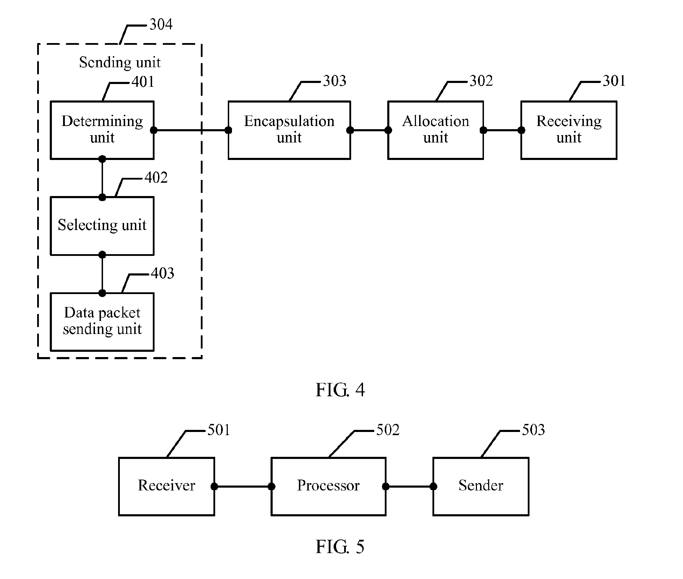

To better understand the label switching router in this embodiment of the present invention, refer to FIG. 4, which is an embodiment of a label switching router according to an embodiment of the present invention, including:
the receiving unit 301, the allocation unit 302, the encapsulation unit 303, and the sending unit 304 that are shown in FIG. 3, which are similar to content described in the embodiment shown in FIG. 3, and details are not described herein again.

In this embodiment of the present invention, the sending unit 304 includes:
a determining unit 401, configured to: after the encapsulation unit 303 forms the second IP data packet, determine, by using the first label, a routing path that can be used to send the second IP data packet;
a selecting unit 402, configured to: after the determining unit 401 determines the routing path that can be used to send the second IP data packet, select, by using the second label, one routing path from the routing path that can be used to send the second IP data packet; and
a data packet sending unit 403, configured to: after the selecting unit 402 selects the routing path, send the second IP data packet according to the selected routing path.

In this embodiment of the present invention, when the semantic information includes user information of the user, the second label is used to identify a type of the user information, and the selecting unit 402 is configured to: after the determining unit 401 determines the routing path that can be used to send the second IP data packet, select, by using a level corresponding to the type of the user information, one routing path from the routing path that can be used to send the second IP data packet. The semantic information may further include security requirement information of the user, the second label is further used to identify a level of the security requirement information of the user, and the selecting unit 402 is configured to: after the determining unit 401 determines the routing path that can be used to send the second IP data packet, select, by using the level corresponding to the type of the user information and a level corresponding to the type of the security requirement information, one routing path from the routing path that can be used to send the second IP data packet.

In this embodiment of the present invention, the semantic information includes service information carried in the first IP data packet, the second label may be used to identify a type of the service information, and the selecting unit 402 is configured to: after the determining unit 401 determines the routing path that can be used to send the second IP data packet, select, by using a level corresponding to the type of the service information, one routing path from the routing path that can be used to send the second IP data packet. The semantic information may further include security requirement information corresponding to the service information, the second label is further used to identify a type of the security requirement information, and the selecting unit 402 is configured to: after the determining unit 401 determines the routing path that can be used to send the second IP data packet, select, by using the level corresponding to the type of the service information and a level corresponding to the type of the security requirement information, one routing path from the routing path that can be used to send the second IP data packet.

In this embodiment of the present invention, the semantic information includes a source address of the first IP data packet, the second label is used to identify source address classification information corresponding to the source address, and the selecting unit 402 is configured to: after the determining unit 401 determines the routing path that can be used to send the second IP data packet, select, by using the source address classification information, one routing path from the routing path that can be used to send the second IP data packet. The semantic information may further include security requirement information corresponding to the source address classification information, the second label is further used to identify a type of the security requirement information, and the selecting unit 402 is configured to: after the determining unit 401 determines the routing path that can be used to send the second IP data packet, select, by using the source address classification information and a level corresponding to the type of the security requirement information, one routing path from the routing path that can be used to send the second IP data packet.

In this embodiment of the present invention, in the label switching router, after the receiving unit 301 receives a first IP data packet sent by a user by using a user equipment, the allocation unit 302 allocates a first label and a second label to the first IP data packet, where the first label is used to identify a destination address of the first IP data packet, the second label is used to identify a type of semantic information corresponding to the first IP data packet, and the semantic information is different from the destination address; then, the encapsulation unit 303 encapsulates the first label and the second label into an outer layer of the first IP data packet to form a second IP data packet, where the second label is an outer label, and the first label is an inner label; after the encapsulation unit 303 forms the second IP data packet, the determining unit 401 in the sending unit 304 determines, by using the first label, a routing path that can be used to send the second IP data packet; then, the selecting unit 402 in the sending unit 304 selects, by using the second label, one routing path from the routing path that can be used to send the second IP data packet; and finally the data packet sending unit 403 in the sending unit 304 sends the second IP data packet according to the selected routing path, to implement sending of the IP data packet.

In the embodiments of the present invention, after receiving a first IP data packet sent by a user by using a user equipment, an edge LSR allocates, to the first IP data packet, a first label for identifying a destination address and a second label for identifying a type of semantic information; encapsulates the allocated first label and second label into an outer layer of the first IP data packet to form a second IP data packet, where the semantic information is different from the destination address; and sends the second IP data packet according to the first label and the second label of the second IP data packet. Because the second label is used to identify the type of the semantic information, by sending the second IP data packet by using the type of the semantic information, differentiated forwarding of the IP data packet can be effectively implemented, thereby meeting a requirement of an operator for a differentiated service of forwarding an IP data packet.

Referring to FIG. 5, FIG. 5 is an embodiment of a label switching router according to an embodiment of the present invention, including:
a receiver 501, a processor 502, and a sender 503, where
the receiver 501 is configured to receive a first IP data packet sent by a user by using a user equipment;
the processor 502 is configured to: after the receiver receives the first IP data packet, allocate a first label and a second label to the first IP data packet, where the first label is used to identify a destination address of the first IP data packet, the second label is used to identify a type of semantic information corresponding to the first IP data packet, and the semantic information is different from the destination address; encapsulate the first label and the second label into an outer layer of the first IP data packet to form a second IP data packet, where the second label is an outer label, and the first label is an inner label; and trigger the sender 503 to send the second IP data packet according to the first label and the second label; and
the sender 503 is configured to send the second IP data packet.

In this embodiment of the present invention, in an LSR, after the receiver 501 receives a first IP data packet sent by a user by using a user equipment, the processor 502 allocates a first label and a second label to the received first IP data packet, encapsulates the first label and the second label into an outer layer of the first IP data packet to form a second IP data packet, where the first label is used to identify a destination address, and the second label is used to identify a type of semantic information, and triggers the sender 503 to send the second IP data packet according to the first label and the second label in the second IP data packet; and finally, the sender 503 sends the second IP data packet.

In this embodiment of the present invention, an LSR allocates a first label and a second label to a received first IP data packet, to form a second IP data packet; and sends the second IP data packet according to the first label and the second label. Because the second label is used to identify a type of semantic information, an LSR in an LSR domain can effectively implement differentiated forwarding of an IP data packet, thereby meeting a requirement of an operator for a differentiated service of forwarding an IP data packet.

A person of ordinary skill in the art may understand that all or a part of the steps of the methods in the embodiments may be implemented by a program instructing relevant hardware. The program may be stored in a computer readable storage medium. The storage medium may include: a read-only memory, a magnetic disk, or an optical disc.

An IP data packet sending method and a label switching router provided by the present invention are described in detail in the foregoing, a person of ordinary skill in the art may change a specific implementation manner and an application scope based on the idea of the embodiments of the present invention. In conclusion, this specification should not be construed as a limitation to the present invention.

## Claims

1. An Internet Protocol IP data packet sending method, comprising:
receiving a first IP data packet sent by a user by using a user equipment;
allocating a first label and a second label to the first IP data packet, wherein the first label is used to identify a destination address of the first IP data packet, the second label is used to identify a type of semantic information corresponding to the first IP data packet, and the semantic information is different from the destination address;
encapsulating the first label and the second label into an outer layer of the first IP data packet to form a second IP data packet, wherein the second label is an outer label, and the first label is an inner label; and
sending the second IP data packet according to the first label and the second label.

2. The sending method according to claim 1, wherein the sending the second IP data packet according to the first label and the second label comprises:
determining, by using the first label, a routing path that can be used to send the second IP data packet;
selecting, by using the second label, one routing path from the routing path that can be used to send the second IP data packet; and
sending the second IP data packet according to the selected routing path.

3. The sending method according to claim 2, wherein the semantic information comprises user information of the user, and the second label is used to identify a type of the user information; and
the selecting, by using the second label, one routing path from the routing path that can be used to send the second IP data packet comprises:
selecting, by using a level corresponding to the type of the user information, one routing path from the routing path that can be used to send the second IP data packet.

4. The sending method according to claim 3, wherein the semantic information further comprises security requirement information of the user, and the second label is further used to identify a type of the security requirement information; and
the selecting, by using a level corresponding to the type of the user information, one routing path from the routing path that can be used to send the second IP data packet comprises:
selecting, by using the level corresponding to the type of the user information and a level corresponding to the type of the security requirement information, one routing path from the routing path that can be used to send the second IP data packet.

5. The sending method according to claim 2, wherein the semantic information comprises service information carried in the first IP data packet, and the second label is used to identify a type of the service information; and
the selecting, by using the second label, one routing path from the routing path that can be used to send the second IP data packet comprises:
selecting, by using a level corresponding to the type of the service information, one routing path from the routing path that can be used to send the second IP data packet.

6. The sending method according to claim 5, wherein the semantic information further comprises security requirement information corresponding to the service information, and the second label is further used to identify a type of the security requirement information; and
the selecting, by using a level corresponding to the type of the service information, one routing path from the routing path that can be used to send the second IP data packet comprises:
selecting, by using the level corresponding to the type of the service information and a level corresponding to the type of the security requirement information, one routing path from the routing path that can be used to send the second IP data packet.

7. The sending method according to claim 2, wherein the semantic information comprises a source address of the first IP data packet, and the second label is used to identify source address classification information corresponding to the source address; and
the selecting, by using the second label, one routing path from the routing path that can be used to send the second IP data packet comprises:
selecting, by using the source address classification information, one routing path from the routing path that can be used to send the second IP data packet.

8. The sending method according to claim 7, wherein the semantic information further comprises security requirement information corresponding to the source address classification information, and the second label is further used to identify a type of the security requirement information; and
the selecting, by using the source address classification information, one routing path from the routing path that can be used to send the second IP data packet comprises:
selecting, by using the source address classification information and a level corresponding to the type of the security requirement information, one routing path from the routing path that can be used to send the second IP data packet.

9. A label switching router, comprising:
a receiving unit, configured to receive a first IP data packet sent by a user by using a user equipment;
an allocation unit, configured to: after the receiving unit receives the first IP data packet, allocate a first label and a second label to the first IP data packet, wherein the first label is used to identify a destination address of the first IP data packet, the second label is used to identify a type of semantic information corresponding to the first IP data packet, and the semantic information is different from the destination address;
an encapsulation unit, configured to: after the allocation unit allocates the first label and the second label, encapsulate the first label and the second label into an outer layer of the first IP data packet to form a second IP data packet, wherein the second label is an outer label, and the first label is an inner label; and
a sending unit, configured to: after the encapsulation unit forms the second IP data packet, send the second IP data packet according to the first label and the second label.

10. The label switching router according to claim 9, wherein the sending unit comprises:
a determining unit, configured to: after the encapsulation unit forms the second IP data packet, determine, by using the first label, a routing path that can be used to send the second IP data packet;
a selecting unit, configured to: after the determining unit determines the routing path that can be used to send the second IP data packet, select, by using the second label, one routing path from the routing path that can be used to send the second IP data packet; and
a data packet sending unit, configured to: after the selecting unit selects the routing path, send the second IP data packet according to the selected routing path.

11. The label switching router according to claim 10, wherein the semantic information comprises user information of the user, the second label is used to identify a type of the user information, and the selecting unit is configured to: after the determining unit determines the routing path that can be used to send the second IP data packet, select, by using a level corresponding to the type of the user information, one routing path from the routing path that can be used to send the second IP data packet.

12. The label switching router according to claim 11, wherein the semantic information further comprises security requirement information of the user, the second label is further used to identify a type of the security requirement information, and the selecting unit is configured to: after the determining unit determines the routing path that can be used to send the second IP data packet, select, by using the level corresponding to the type of the user information and a level corresponding to the type of the security requirement information, one routing path from the routing path that can be used to send the second IP data packet.

13. The label switching router according to claim 10, wherein the semantic information comprises service information carried in the first IP data packet, and the second label is used to identify a type of the service information,
the selecting unit is configured to: after the determining unit determines the routing path that can be used to send the second IP data packet, select, by using a level corresponding to the type of the service information, one routing path from the routing path that can be used to send the second IP data packet.

14. The label switching router according to claim 13, wherein the semantic information further comprises security requirement information corresponding to the service information, the second label is further used to identify a type of the security requirement information, and the selecting unit is configured to: after the determining unit determines the routing path that can be used to send the second IP data packet, select, by using the level corresponding to the type of the service information and a level corresponding to the type of the security requirement information, one routing path from the routing path that can be used to send the second IP data packet.

15. The label switching router according to claim 10, wherein the semantic information comprises a source address of the first IP data packet, the second label is used to identify source address classification information corresponding to the source address, and the selecting unit is configured to: after the determining unit determines the routing path that can be used to send the second IP data packet, select, by using the source address classification information, one routing path from the routing path that can be used to send the second IP data packet.

16. The label switching router according to claim 15, wherein the semantic information further comprises security requirement information corresponding to the source address classification information, the second label is further used to identify a type of the security requirement information, and the selecting unit is configured to: after the determining unit determines the routing path that can be used to send the second IP data packet, select, by using the source address classification information and a level corresponding to the type of the security requirement information, one routing path from the routing path that can be used to send the second IP data packet.

17. A label switching router, comprising:
a receiver, a processor, and a sender, wherein
the receiver is configured to receive a first IP data packet sent by a user by using a user equipment;
the processor is configured to: after the receiver receives the first IP data packet, allocate a first label and a second label to the first IP data packet, wherein the first label is used to identify a destination address of the first IP data packet, the second label is used to identify a type of semantic information corresponding to the first IP data packet, and the semantic information is different from the destination address; encapsulate the first label and the second label into an outer layer of the first IP data packet to form a second IP data packet, wherein the second label is an outer label, and the first label is an inner label; and trigger the sender to send the second IP data packet according to the first label and the second label; and
the sender is configured to send the second IP data packet.
